# EUROPEAN PATENT APPLICATION

(11) **EP 4 813 909 A1**
(43) Date of publication of application: **30.09.2026**
(21) Application number: 24924917.8
(22) Date of filing: 23.12.2024
(51) Int. Cl.: C01B 3/38, C01B 3/44, C01B 3/48, C01B 3/50, C01B 3/40

(54) **METHOD AND SYSTEM FOR PRODUCING HYDROGEN**

(30) Priority: 16.02.2024 KR 20240022425
(71) Applicant: SK Innovation Co., Ltd., Seoul 03188 (KR)
(72) Inventor: YUN, Seokwon, Daejeon 34124 (KR); JEON, Heejung, Daejeon 34124 (KR); PARK, Junhyung, Daejeon 34124 (KR); SON, Sungreal, Daejeon 34124 (KR); YU, Seunghan, Daejeon 34124 (KR); JEONG, Yongseong, Daejeon 34124 (KR)
(74) Representative: Lorenz Seidler Gossel Part. mbB
(86) International application number: PCT/KR2024/020951
(87) International publication number: WO 2025/173892

(57) **Abstract**

The present disclosure relates to a method and a system for producing hydrogen, wherein the method comprises the steps of: (S1) introducing a feed gas containing C1 to C4 hydrocarbons into a first reactor and performing dry reforming to produce a first mixed gas; (S2) introducing carbon dioxide and carbon into a second reactor and converting same into a second mixed gas containing carbon monoxide via a reverse Boudouard reaction; (S3) mixing the first mixed gas and the second mixed gas to prepare a third mixed gas; (S4) generating synthetic gas from the third mixed gas through a water gas conversion reaction; and (S5) separating carbon dioxide from the synthetic gas to obtain hydrogen, wherein the carbon dioxide separated in step (S5) is recycled to the second reactor.

## Description

### [Technical Field]

The present disclosure relates to a method and system for producing hydrogen.

### [Background Art]

A gasification process generally refers to a series of processes in which carbonaceous feedstocks such as coal, organic waste, and biomass are reacted under a supply of steam, oxygen, carbon dioxide, or a mixture thereof and converted into syngas.

Gasification process technology has been extended to technologies for producing feedstocks and fuels for various compounds. For example, hydrogen in syngas may be used in applications such as hydrogen power generation, ammonia production, and refinery processes. However, when hydrogen is obtained from syngas, the hydrogen yield decreases, thereby making it difficult to increase the hydrogen yield.

In recent years, a gasification process using a catalyst has been employed as a process for producing syngas; however, coke formation in the gasification process deactivates the catalyst, thereby causing process issues during continuous operation due to the deactivated catalyst. In addition, in order to ensure cost-effectiveness, a relatively expensive catalyst needs to be recovered; however, to recover the catalyst discharged in a state agglomerated with coke and the like, a number of subsequent processes (such as air burning) should be performed, resulting in a significant decrease in process efficiency.

In addition, the conventional gasification process has a significantly low production yield of syngas, which may be converted into high-value-added products, resulting in low productivity and consequently limiting its utilization or commercialization. From the viewpoint of environmental protection, it is desirable to suppress carbon dioxide emissions. However, the products of the conventional gasification process include not only hydrogen and carbon monoxide but also carbon dioxide and solid coke, resulting in large emissions of carbon dioxide and solid coke, thereby posing a serious problem in that such products rather cause further environmental pollution.

Accordingly, there is a need for a method and system for producing hydrogen that may efficiently obtain hydrogen by improving the yield of syngas, which may be converted into high-value-added products, and the yield of hydrogen obtained therefrom in a gasification process, while minimizing the generation of carbon dioxide and solid coke.

### [Disclosure]

### [Technical Problem]

According to an aspect of the present disclosure, a method and system for producing hydrogen with a significantly improved hydrogen production yield may be provided.

According to another aspect of the present disclosure, a method and system for producing hydrogen with significantly improved process efficiency may be provided.

According to still another aspect of the present disclosure, a method and system for producing hydrogen that may minimize the generation of carbon dioxide and solid coke may be provided.

According to an aspect of the present disclosure, no residual gas may be generated during hydrogen production.

According to another aspect of the present disclosure, a catalyst may be regenerated to perform a continuous dual circulating fluidized bed reaction.

### [Technical Solution]

In one general aspect, a method for producing hydrogen includes: (S1) introducing a feed gas containing C1 to C4 hydrocarbons into a first reactor and generating a first mixed gas through dry reforming; (S2) introducing carbon dioxide and carbon into a second reactor and converting the carbon dioxide and carbon into a second mixed gas containing carbon monoxide through a reverse Boudouard reaction; (S3) mixing the first mixed gas and the second mixed gas to prepare a third mixed gas; (S4) generating syngas from the third mixed gas through a water-gas shift reaction; and (S5) separating carbon dioxide from the syngas to obtain hydrogen, wherein the carbon dioxide separated in step (S5) is recirculated to the second reactor.

In an embodiment of the present disclosure, the method for producing hydrogen may further include purifying the first mixed gas or the second mixed gas.

In an embodiment of the present disclosure, the purification may be performed in at least one selected from the group consisting of a scrubber and an adsorption column.

In an embodiment of the present disclosure, in step (S2), carbon may be supplied from outside, or carbon generated in step (S1) may be used.

In an embodiment of the present disclosure, step (S1) or (S2) may be performed in the presence of a composite catalyst in which an active metal is supported on a support.

In an embodiment of the present disclosure, the active metal may include one or more selected from the group consisting of nickel, vanadium, iron, platinum, palladium, and ruthenium.

In an embodiment of the present disclosure, the support may include one or more selected from the group consisting of silica, alumina, silica-alumina, clay, carbon, zirconia, titania, zeolite, SAPO, and ALPO.

In an embodiment of the present disclosure, step (S2) may be performed at a temperature of 600 to 1,000°C and a pressure of 50 to 500 kPa.

In another general aspect, a system for producing hydrogen includes: a first reactor configured to generate a first mixed gas by subjecting a feed gas containing C1 to C4 hydrocarbons to a dry reforming reaction in the presence of a catalyst; a second reactor configured to convert carbon dioxide and carbon into a second mixed gas containing carbon monoxide through a reverse Boudouard reaction; a gas mixing unit configured to prepare a third mixed gas by mixing the first mixed gas and the second mixed gas; a syngas generation unit configured to convert the third mixed gas into syngas through a water-gas shift reaction; a carbon dioxide separation unit configured to separate carbon dioxide from the syngas to obtain hydrogen; and a carbon dioxide recirculation line configured to recirculate the carbon dioxide separated in the carbon dioxide separation unit to the second reactor.

In an embodiment of the present disclosure, the first reactor may be a first fluidized bed reactor, and the second reactor may be a second fluidized bed reactor.

In an embodiment of the present disclosure, the system for producing hydrogen may further include: a cyclone connected between the first fluidized bed reactor and the gas mixing unit; a catalyst supply line connecting the cyclone and the second fluidized bed reactor; and a catalyst recirculation line connecting the second fluidized bed reactor and the first fluidized bed reactor, wherein the cyclone may be configured to separate the first mixed gas and the catalyst discharged from the first fluidized bed reactor, supply the first mixed gas to the gas mixing unit, and supply the catalyst to the second fluidized bed reactor.

In an embodiment of the present disclosure, the system for producing hydrogen may further include a purification unit configured to purify the first mixed gas or the second mixed gas.

In an embodiment of the present disclosure, the purification unit may include at least one selected from the group consisting of a scrubber and an adsorption column.

### [Advantageous Effects]

The method and system for producing hydrogen according to an embodiment of the present disclosure may significantly improve the hydrogen production yield.

The method and system for producing hydrogen according to another embodiment of the present disclosure may significantly improve process efficiency.

The method and system for producing hydrogen according to still another embodiment of the present disclosure may minimize the generation of carbon dioxide and solid coke.

The method and system for producing hydrogen according to an embodiment of the present disclosure may allow hydrogen to be produced without generating residual gas during hydrogen production.

The method and system for producing hydrogen according to another embodiment of the present disclosure may regenerate a catalyst to perform a continuous dual circulating fluidized bed reaction.

The method and system for producing hydrogen according to still another embodiment of the present disclosure may produce hydrogen in an eco-friendly manner.

### [Description of Drawings]

FIG. 1 is a schematic diagram showing a system for producing hydrogen according to an embodiment of the present disclosure.
FIG. 2 is a schematic diagram showing a system for producing hydrogen including a catalyst circulation process according to an embodiment of the present disclosure.

### [Best Mode]

The advantages and features of the present disclosure, and methods for achieving them, will become apparent with reference to the embodiments described below in detail. However, the present disclosure is not limited to the embodiments disclosed below and may be implemented in various different forms. These embodiments are provided only so that the present disclosure is complete and the scope of the invention is fully conveyed to those skilled in the art to which the present disclosure pertains, and the present disclosure is defined only by the scope of the claims.

Unless otherwise defined, all terms (including technical and scientific terms) used in the present specification may be used with meanings commonly understood by those skilled in the art to which the present disclosure pertains.

Unless otherwise specifically indicated, singular forms used in the present specification may be construed to include plural forms.

A numerical range used in the present specification includes upper and lower limits and all values within these limits, increments logically derived from the form and span of a defined range, all doubly limited values, and all possible combinations of the upper and lower limits in the numerical range defined in different forms. Unless otherwise specifically defined in the present specification, values out of the numerical range that may occur due to experimental errors or rounding of values also fall within the defined numerical range.

The term "comprise(s)" described in the present specification is an open-ended description having a meaning equivalent to terms such as "include(s)", "contain(s)", "have (has)", and "is/are characterized by", and does not exclude elements, materials, or processes which are not further listed.

Unless otherwise defined, the unit of % used in the present specification without special mention refers to wt%.

In the present specification, unless otherwise specifically defined, "A to B" means "A or more and B or less".

In the present specification, "syngas" refers to a mixed gas containing hydrogen and carbon monoxide, and may contain carbon dioxide and the like.

In the present specification, the term "C_{A}-C_{B}" means having A to B carbon atoms.

Hereinafter, the method and system for producing hydrogen of the present disclosure will be described in detail. However, the description is merely exemplary and the present disclosure is not limited to specific embodiments described by way of example.

Conventionally, a gasification process using a catalyst has been employed as a process for producing syngas; however, coke formation in the gasification process deactivates the catalyst, thereby causing process issues during continuous operation due to the deactivated catalyst. Further, although it is necessary to recover relatively expensive catalysts in order to ensure economic feasibility, recovering catalysts discharged in a state agglomerated with coke and the like requires performing a number of subsequent processes (such as air burning), resulting in a significant decrease in process efficiency. In addition, a large amount of carbon dioxide and solid coke were emitted during the process, thereby causing environmental pollution. In addition, the conventional gasification process had a problem in that the production yield of syngas was significantly low and the hydrogen production yield was low, resulting in low productivity. Accordingly, the inventors of the present disclosure devised a method and system for producing hydrogen that may achieve a significantly high hydrogen yield while minimizing the generation of carbon dioxide and solid coke.

The present disclosure provides a method for producing hydrogen, the method including: (S1) introducing a feed gas containing C1 to C4 hydrocarbons into a first reactor and generating a first mixed gas through dry reforming; (S2) introducing carbon dioxide and carbon into a second reactor and converting the carbon dioxide and carbon into a second mixed gas containing carbon monoxide through a reverse Boudouard reaction; (S3) mixing the first mixed gas and the second mixed gas to prepare a third mixed gas; (S4) generating syngas from the third mixed gas through a water-gas shift reaction; and (S5) separating carbon dioxide from the syngas to obtain hydrogen, wherein the carbon dioxide separated in step (S5) is recirculated to the second reactor.

The method for producing hydrogen according to the present disclosure, as compared with a conventional gasification process, may convert a feed gas containing C1 to C4 hydrocarbons into syngas with high efficiency, thereby maximizing the yield of high-value-added hydrogen converted from the syngas. In addition, carbon dioxide and/or solid carbon or solid coke generated in the process of producing syngas may be recirculated to the second reactor and converted into a feedstock for syngas, thereby minimizing the generation of carbon dioxide and solid coke or solid carbon in the hydrogen production process and preventing environmental pollution.

In an embodiment according to the present disclosure, the feed gas may include at least one selected from the group consisting of methane, hydrogen, carbon monoxide, and carbon dioxide.

As an example for increasing the content of methane in the feed gas, the feed gas may further include one or more selected from the group consisting of landfill gas, shale gas, refinery off-gas, and biogas. The landfill gas, shale gas, refinery off-gas, and biogas described above contain methane and carbon dioxide in an amount of 40 vol% or more, specifically 50 vol% or more. Accordingly, when the feed gas further includes the above-described gas, the production yield of syngas may be further improved through subsequent processes such as a dry reforming reaction and a reverse Boudouard reaction.

The C1 to C4 hydrocarbons may include at least one selected from the group consisting of methane, ethane, propane, and butane, but are not limited thereto.

In an embodiment according to the present disclosure, a C/O elemental ratio of the feed gas may have an upper limit of 0.15 or less, 0.1 or less, or 0.08 or less, and a lower limit of 0.01 or more, 0.03 or more, or 0.05 or more, specifically 0.01 to 0.15, and more specifically 0.03 to 0.1.

In the method for producing hydrocarbons according to the present disclosure, the reforming reaction of methane may be smoothly performed even when the feed gas has a relatively high C/O elemental ratio, as in the above-described range. Specifically, as the catalyst used in the methane reforming reaction is circulated through a circulation process described below, the reaction may be continuously performed regardless of deactivation of the catalyst by coke that may be formed during dry reforming of methane.

Step (S1) is a step of introducing a feed gas containing C1 to C4 hydrocarbons into a first reactor and generating a first mixed gas through dry reforming. In step (S1), a dry reforming reaction according to the following Reaction Scheme 1 may be involved.

[Reaction Scheme 1] CH₄ + CO₂ → 2CO + 2H₂ (dry reforming reaction)

By performing the dry reforming reaction in step (S1), the reforming efficiency of methane may be improved, thereby increasing the yield of hydrocarbons. Specifically, in the dry reforming process, a ratio of hydrogen to carbon monoxide in the product is close to 1:1, such that the subsequent catalytic reaction of syngas may be performed more smoothly.

The dry reforming reaction in step (S1) may be performed at a temperature of 600 to 1,400°C and a pressure of 30 to 2,000 kPa.

Step (S1) may be performed without a catalyst, but may also be performed using a catalyst in order to increase the reaction conversion at a low temperature of 600 to 700°C.

As the catalyst in step (S1), a composite catalyst in which an active metal is supported on a support may be used. The active metal may include one or more selected from the group consisting of nickel, vanadium, iron, platinum, palladium, and ruthenium. Generally, nickel, vanadium, or iron may be used as the active metal, and when the feedstock, such as organic waste, has a low impurity content in the heat treatment process, a noble metal such as platinum, palladium, or ruthenium may be used.

In an example, the support may be a solid acid material such as an oxide or a zeolite, and specifically may be one or more selected from the group consisting of ZSM-5, ZSM-11, USY zeolite, ferrierite, mordenite, MCM-22, SUZ-4, L-type zeolite, silica, alumina, silica-alumina, clay, carbon, zirconia, titania, SAPO, and ALPO.

The dry reforming reaction in step (S1) may be performed in a first fixed bed reactor or a first fluidized bed reactor.

By performing the dry reforming reaction in step (S1) in the first fixed bed reactor, the reforming reactivity of methane and process stability may be improved so that syngas may be produced at a high yield, thereby improving the yield of hydrogen.

In addition, since step (S1) is performed in a fluidized bed reactor, a circulation process may be implemented in which the catalyst used in the methane reforming reaction is introduced into a subsequent reverse Boudouard reaction process, regenerated, and then resupplied. Although coke may accumulate on the catalyst and deactivate the catalytic reaction as the methane reforming reaction is performed in a dry manner in step (S1), step (S1) is performed in a fluidized bed reactor, such that a circulation process of regenerating and resupplying the catalyst may be performed, thereby providing an advantage in that a continuous reforming reaction is possible even when methane is dry-reformed.

In an embodiment according to the present disclosure, the method for producing hydrogen may further include purifying the first mixed gas or the second mixed gas.

In addition, the purification may be performed using at least one selected from the group consisting of a high-pressure dust-collecting filter, water washing, alkaline solution washing, and passing through a ceramic filter, or a combination of two or more thereof, but is not limited thereto. When water washing or alkaline solution washing is used, impurities such as H₂S and NH₃ contained in the first mixed gas or the second mixed gas may be removed, and when the first mixed gas or the second mixed gas is passed through a ceramic filter or a dust-collecting filter, impurities such as tar and dust may also be removed. In particular, carbon such as tar that is contained in the first mixed gas and then separated through purification may be introduced into the second reactor and used as a carbon source for the reverse Boudouard reaction.

In an embodiment according to the present disclosure, the purification may be performed in at least one selected from the group consisting of a scrubber and an adsorption column. By performing the purification through the scrubber, impurities such as Cl, N, and S may be removed. By performing the purification through the adsorption column, metal impurities such as Hg and As may be removed. The scrubber or the adsorption column may perform purification using a conventional method.

In an embodiment according to the present disclosure, step (S2) is a step of introducing carbon dioxide and carbon into a second reactor and converting the carbon dioxide and carbon into a second mixed gas containing carbon monoxide through a reverse Boudouard reaction. By introducing the carbon dioxide separated in step (S5), which will be described below, into the second reactor and additionally converting the carbon dioxide into carbon monoxide through the reverse Boudouard reaction, it is possible to prevent environmental pollution in terms of reducing emitted carbon dioxide, while maximizing the yield of syngas and thereby maximizing the hydrogen yield. The reverse Boudouard reaction may involve the following Reaction Scheme 2.

[Reaction Scheme 2] C + CO₂ → 2CO

Step (S2) may be performed at a temperature of 600 to 1,000°C and a pressure of 50 to 500 kPa.

In an embodiment according to the present disclosure, in step (S2), carbon may be supplied from outside, or carbon generated in step (S1) may be used. Specifically, in an embodiment according to the present disclosure, in step (S2), the carbon source for the reverse Boudouard reaction may be a catalyst on which coke supplied in step (S1) is deposited. In addition, if necessary, the step may be performed by additionally supplying carbon such as activated carbon or graphite from outside. The graphite may be high-purity graphite.

The reverse Boudouard reaction in step (S2) may be performed in a second fixed bed reactor or a second fluidized bed reactor.

By performing the reverse Boudouard reaction in step (S2) in the second fixed bed reactor, carbon dioxide separated in step (S5), which will be described below, may be converted into carbon monoxide with high efficiency. In addition, in the present disclosure, when a first fixed bed dry reforming reactor is used in step (S1), it may be advantageous, in terms of increasing the amount of syngas produced, to improve the reactivity of the reverse Boudouard reaction by using a second fixed bed reverse Boudouard reactor having excellent reaction efficiency in step (S2).

When the dry reforming reaction in step (S1) is performed in a first fluidized bed reactor, the first mixed gas discharged from the first fluidized bed reactor may be supplied to a second fluidized bed reactor, in which a reverse Boudouard reaction is performed, after the catalyst is separated therefrom by a cyclone and supplied through a catalyst supply line. In the second fluidized bed reactor, the catalyst on which coke is deposited may be regenerated by reacting as a carbon source for the reverse Boudouard reaction, and the regenerated catalyst may be supplied again to the first fluidized bed reactor through a catalyst recirculation line. When such a catalyst circulation process is used, the reforming reaction may be performed continuously, and environmental pollution may be reduced and an economical process may be performed because there is no need to supply a carbon source required for the reverse Boudouard reaction from outside.

That is, according to an embodiment of the present disclosure, the yield of syngas may be maximized and emissions of carbon dioxide and solid carbon and the like may be minimized through the dry reforming reaction and the reverse Boudouard reaction, and, at the same time, as the first fluidized bed reactor and the second fluidized bed reactor, in which the dry reforming reaction and the reverse Boudouard reaction are performed, are connected through a circulation process, continuous and economical process operation through catalyst regeneration may be achieved.

As the catalyst in step (S2), a composite catalyst in which an active metal is supported on a support may be used. The active metal may include one or more selected from the group consisting of nickel, vanadium, iron, platinum, palladium, and ruthenium. Generally, nickel, vanadium, or iron may be used as the active metal, and when the feedstock, such as organic waste, has a low impurity content in the heat treatment process, a noble metal such as platinum, palladium, or ruthenium may be used.

In an embodiment according to the present disclosure, the support used for the catalyst in step (S2) may be a solid acid material such as an oxide or a zeolite, and may specifically be one or more selected from the group consisting of ZSM-5, ZSM-11, USY zeolite, ferrierite, mordenite, MCM-22, SUZ-4, L-type zeolite, silica, alumina, silica-alumina, clay, carbon, zirconia, titania, SAPO, and ALPO.

In an embodiment according to the present disclosure, step (S3) may be a step of mixing the first mixed gas and the second mixed gas to prepare a third mixed gas. The third mixed gas may contain at least one selected from the group consisting of hydrogen, carbon monoxide, and carbon dioxide. Additionally, the third mixed gas may further contain methane that remains unreacted in step (S1).

In an embodiment according to the present disclosure, step (S4) is a step of generating syngas through a water-gas shift reaction. The third mixed gas may be converted into syngas through a water-gas shift reaction. The water-gas shift reaction may involve the following Chemical Formula 3.

[Chemical Formula 3] CO + H₂O → H₂ + CO₂

The syngas refers to a mixed gas containing hydrogen and carbon monoxide, and may additionally contain carbon dioxide.

The water-gas shift reaction may be performed in the presence of a catalyst containing, as an active metal, one selected from the group consisting of Cu, Zn, Fe, and Cr.

The water-gas shift reaction may be performed at a temperature of 100 to 400°C, specifically 100 to 300°C, and a pressure of 20 to 80 bar, specifically 25 to 70 bar.

The water-gas shift reaction may be repeatedly performed so that a conversion of carbon dioxide is 95% or more, 96% or more, 97% or more, 98% or more, or 99% or more.

In an embodiment according to the present disclosure, step (S5) is a step of separating carbon dioxide from the syngas to obtain hydrogen. In an embodiment according to the present disclosure, a method of separating the syngas into carbon dioxide and a gas containing hydrogen is not particularly limited as long as it is a known method, and in the present disclosure, the separation may be performed using a carbon dioxide separation unit. Specifically, the carbon dioxide separation unit may be an amine scrubber. In general, an amine scrubber, which binds and removes carbon dioxide using an amine-based material, may separate components such as carbon dioxide and hydrogen sulfide from a gas stream and recover a gas containing hydrogen, carbon monoxide, or an inert gas. Accordingly, when an amine scrubber is used, the syngas may be separated into carbon dioxide and a gas containing hydrogen.

According to another embodiment of the present disclosure, the separation of carbon dioxide may be performed through a carbon dioxide separation membrane.

In another embodiment according to the present disclosure, the carbon dioxide separation unit may be a carbon capture unit (CC unit). When a CC unit is used for separation of carbon dioxide, the CC unit may adsorb and separate carbon dioxide using an adsorbent containing one or two or more selected from calcium oxide, calcium hydroxide, dolomite, limestone, and trona. By using the carbon capture unit (CC unit), the syngas may be separated into carbon dioxide and a gas containing hydrogen.

In an embodiment according to the present disclosure, the carbon dioxide separated in step (S5) may be 100% carbon dioxide, or may be in the form of a mixed gas further containing another gas. In this case, the mixed gas further containing another gas may have a lower limit of carbon dioxide content of 40 vol% or more, 50 vol% or more, or 60 vol% or more, and an upper limit of carbon dioxide content of 99 vol% or less, 90 vol% or less, 80 vol% or less, or 70 vol% or less. In the carbon dioxide separation unit, after carbon dioxide is captured and then separated, in order to separate carbon dioxide at high purity, a regeneration column in which carbon dioxide is separated from the adsorbent needs to be designed with a high number of stages, and thus more energy is consumed. Accordingly, as the mixed gas further containing another gas contains carbon dioxide in the above-described range, the carbon dioxide separation process may be performed under somewhat milder conditions.

The carbon dioxide separated in step (S5) may be recirculated to the second reactor. Since the carbon dioxide separated in step (S5) is not discharged to the outside but is recirculated to the second reactor, carbon dioxide emissions during hydrogen production may be reduced, and a more excellent hydrogen yield may be achieved. The carbon dioxide separated in step (S5) may be introduced directly into the second reactor, or may be mixed with carbon dioxide supplied from outside or carbon dioxide supplied from another process and then introduced into the second reactor.

In addition, the present disclosure provides a system for producing hydrogen. The content described with respect to the method for producing hydrogen may be equally applied to the system for producing hydrogen within the overlapping scope.

The present disclosure provides a system for producing hydrogen, the system including: a first reactor configured to generate a first mixed gas by subjecting a feed gas containing C1 to C4 hydrocarbons to a dry reforming reaction in the presence of a catalyst; a second reactor configured to convert carbon dioxide and carbon into a second mixed gas containing carbon monoxide through a reverse Boudouard reaction; a gas mixing unit configured to prepare a third mixed gas by mixing the first mixed gas and the second mixed gas; a syngas generation unit configured to convert the third mixed gas into syngas through a water-gas shift reaction; a carbon dioxide separation unit configured to separate carbon dioxide from the syngas to obtain hydrogen; and a carbon dioxide recirculation line configured to recirculate the carbon dioxide separated in the carbon dioxide separation unit to the second reactor.

A system for producing hydrogen 1 according to the present disclosure may produce syngas and hydrogen efficiently and economically by performing a dry reforming reaction and a reverse Boudouard reaction together, and may significantly reduce emissions of carbon dioxide and solid coke.

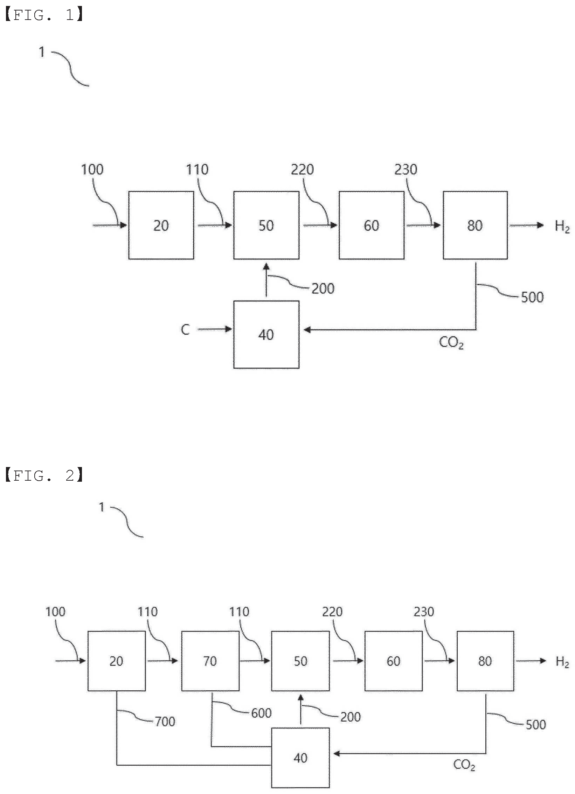

Referring to FIG. 1, a feed gas 100 is introduced into a first reactor 20 and converted into a first mixed gas 110 by a dry reforming reaction. Carbon dioxide and carbon are introduced into a second reactor 40 and converted into a second mixed gas 200 containing carbon monoxide through a reverse Boudouard reaction. The first mixed gas 110 and the second mixed gas 200 are mixed in a gas mixing unit 50 to generate a third mixed gas 220. The third mixed gas 220 is converted into syngas 230 through a water-gas shift reaction in a syngas generation unit 60. Carbon dioxide contained in the syngas 230 is separated in a carbon dioxide separation unit 80, and a gas containing hydrogen may be obtained. The carbon dioxide separated in the carbon dioxide separation unit 80 is recirculated to the second reactor 40 through a carbon dioxide recirculation line 500 and is used again as a feedstock for the reverse Boudouard reaction in the second reactor 40.

In an embodiment according to the present disclosure, the first reactor may be a first fluidized bed reactor, and the second reactor may be a second fluidized bed reactor.

In an embodiment according to the present disclosure, referring to FIG. 2, the system for producing hydrogen 1 may further include a cyclone 70 connected between the first fluidized bed reactor 20 and the gas mixing unit 50, a catalyst supply line 600 connecting the cyclone 70 and the second fluidized bed reactor 40, and a catalyst recirculation line 700 connecting the second fluidized bed reactor 40 and the first fluidized bed reactor 20, wherein the cyclone 70 may be configured to separate the first mixed gas 110 and the catalyst discharged from the first fluidized bed reactor 20, supply the first mixed gas 110 to the gas mixing unit 50, and supply the catalyst to the second fluidized bed reactor 40.

As the first fluidized bed reactor and the second fluidized bed reactor of the system for producing hydrogen of the present disclosure are connected through a circulation process, continuous process operation through catalyst regeneration is possible. In addition, because a catalyst on which coke supplied from the first fluidized bed reactor is deposited may be used without the need to separately supply a carbon source for performing the reverse Boudouard reaction to the second fluidized bed reactor, more economical process operation is possible, and environmental pollution is minimized because solid coke is not discharged.

In an embodiment of the present disclosure, the system for producing hydrogen may further include a purification unit configured to purify the first mixed gas or the second mixed gas. In addition, the purification unit may include at least one selected from the group consisting of a scrubber, an adsorption column, and pressure swing adsorption (PSA).

The purification unit may include a sprayer for spraying a liquid to bring the first mixed gas or the second mixed gas into contact with water or a weakly basic solution containing sodium carbonate, thereby removing impurities such as H₂S, HCl, HOCl, and NH₃, may remove dust using a high-pressure dust-collecting filter, and may remove impurities such as tar by including a ceramic filter, but is not limited thereto, and a conventional purification method may also be used.

Hereinafter, examples of the present disclosure will be further described with reference to specific experimental examples. The examples and comparative examples included in the experimental examples are merely illustrative of the present disclosure and do not limit the scope of the accompanying claims. It is obvious to those skilled in the art that various modifications and alterations may be made without departing from the spirit and scope of the present disclosure, and it is obvious that these modifications and alterations are within the accompanying claims.

### [Example 1]

A feed gas containing 21.52 mol% of H₂, 10.76 mol% of CO, 27.72 mol% of CO₂, and 40 mol% of CH₄ was introduced into a first fluidized bed reactor, and a first mixed gas was prepared through dry reforming under operating conditions of 750°C and 2.0 L/ g_{cat}·h in the presence of a Ni/Al₂O₃ catalyst.

The first mixed gas contained 52.92 mol% of H₂, 30.34 mol% of CO, 7.86 mol% of CO₂, and 8.87 mol% of CH₄.

Carbon dioxide and carbon were introduced into a second fluidized bed reactor and converted into a second mixed gas containing carbon monoxide through a reverse Boudouard reaction. Carbon dioxide separated in a carbon dioxide separation unit described below was supplied to the second fluidized bed reactor. In addition, the spent Ni/Al₂O₃ catalyst separated in the cyclone after the dry reforming reaction in the first fluidized bed reactor was supplied to the second fluidized bed reactor through a catalyst supply line. Coke deposited on the spent catalyst was used as carbon. Under operating conditions of 900°C, 300 kPa, and a throughput of 2.0 L/g_{cat}·h in the presence of the spent Ni/Al₂O₃ catalyst, a reverse Boudouard reaction was performed, thereby generating a second mixed gas containing carbon monoxide. The spent Ni/Al₂O₃ catalyst was regenerated and supplied to the first fluidized bed reactor through a catalyst recirculation line.

The first mixed gas and the second mixed gas were introduced into a gas mixing unit and mixed to generate a third mixed gas. The third mixed gas contained 45.98 mol% of H₂, 39.47 mol% of CO, 6.83 mol% of CO₂, and 7.71 mol% of CH₄.

The third mixed gas was introduced into a syngas generation unit, and syngas was prepared through a water-gas shift reaction performed under operating conditions of 250°C, 35 bar, and a throughput of 1.4 L/g_{cat}·h in the presence of a Cu/Zn/Al₂O₃ catalyst. The syngas contained 51.33 mol% of H₂, 25.65 mol% of CO, 16.08 mol% of CO₂, and 6.94 mol% of CH₄ .

The syngas was introduced into an amine scrubber. Specifically, the syngas was introduced into a first amine scrubber, carbon dioxide was captured in a 30 wt% aqueous amine solution in which monoethanolamine (MEA) was dissolved at 40°C, and a gas containing hydrogen that was not captured was recovered. The aqueous amine solution in the amine scrubber was introduced into an amine regeneration column and separated into the aqueous amine solution and carbon dioxide at 100°C, and the carbon dioxide was recirculated to the second fluidized bed reactor.

The amount of hydrogen produced based on the same feed and the amounts of CO₂ and solid carbon generated per mole of hydrogen in syngas are shown in Table 1.

### [Comparative Example 1]

Comparative Example 1 was performed in the same manner as Example 1, except that the reverse Boudouard reaction was not performed, no second mixed gas was generated, and the carbon dioxide captured in the amine scrubber was not recirculated for the reverse Boudouard reaction. The ratio of hydrogen to carbon monoxide in the syngas was maintained the same as in Example 1.

The amount of hydrogen produced based on the same feed and the amounts of CO₂ and solid carbon generated per mole of hydrogen in syngas are shown in Table 1.

**[Table 1]**

| | Example 1 | Comparative Example 1 |
|---|---|---|
| Amount of hydrogen produced (kmol/h) (based on the same feed) | 94.19 | 79.69 |
| Amounts of CO₂ and solid carbon generated per mole of hydrogen in syngas (mol/mol) | 0.198 | 0.324 |

As in Comparative Example 1, when the reverse Boudouard reaction was not performed, no second mixed gas was generated, and the carbon dioxide captured in the amine scrubber was not recirculated for the reverse Boudouard reaction, it was confirmed that 79.69 kmol/h of hydrogen was produced based on the same feed and 0.324 mol of carbon dioxide and solid carbon was generated per mole of hydrogen in syngas.

On the other hand, as in Example 1, when the reverse Boudouard reaction was performed and the carbon dioxide captured in the amine scrubber was recirculated for the reverse Boudouard reaction, it was confirmed that 94.19 kmol/h of hydrogen was produced based on the same feed and 0.198 mol of carbon dioxide and solid carbon was generated per mole of hydrogen in syngas. That is, it was confirmed that the loss of carbon dioxide and solid carbon generated in the overall process was significantly reduced. In addition, it was confirmed that the amount of hydrogen produced was also significantly increased compared with Comparative Example 1 because the carbon dioxide and solid carbon that were not lost were converted into carbon monoxide and reacted with water introduced in the water-gas shift reaction, thereby increasing the hydrogen yield.

The above description is merely an example of applying the principles of the present disclosure, and other configurations may be further included without departing from the scope of the present disclosure.

- 1: System for producing hydrogen
- 20: First reactor
- 40: Second reactor
- 50: Gas mixing unit
- 60: Syngas generation unit
- 70: Cyclone
- 80: Carbon dioxide separation unit
- 100: Feed gas
- 110: First mixed gas
- 200: Second mixed gas
- 220: Third mixed gas
- 230: Syngas
- 500: Carbon dioxide recirculation line
- 600: Catalyst supply line
- 700: Catalyst recirculation line

## Claims

1. A method for producing hydrogen, the method comprising:
(S1) introducing a feed gas containing C1 to C4 hydrocarbons into a first reactor and generating a first mixed gas through dry reforming;
(S2) introducing carbon dioxide and carbon into a second reactor and converting the carbon dioxide and carbon into a second mixed gas containing carbon monoxide through a reverse Boudouard reaction;
(S3) mixing the first mixed gas and the second mixed gas to prepare a third mixed gas;
(S4) generating syngas from the third mixed gas through a water-gas shift reaction; and
(S5) separating carbon dioxide from the syngas to obtain hydrogen,
wherein the carbon dioxide separated in step (S5) is recirculated to the second reactor.

2. The method of claim 1, further comprising purifying the first mixed gas or the second mixed gas.

3. The method of claim 2, wherein the purification is performed in at least one selected from the group consisting of a scrubber and an adsorption column.

4. The method of claim 1, wherein, in step (S2), carbon is supplied from outside, or carbon generated in step (S1) is used.

5. The method of claim 1, wherein step (S1) or (S2) is performed in the presence of a composite catalyst in which an active metal is supported on a support.

6. The method of claim 5, wherein the active metal includes one or more selected from the group consisting of nickel, vanadium, iron, platinum, palladium, and ruthenium.

7. The method of claim 6, wherein the support includes one or more selected from the group consisting of silica, alumina, silica-alumina, clay, carbon, zirconia, titania, zeolite, SAPO, and ALPO.

8. The method of claim 1, wherein step (S2) is performed at a temperature of 600 to 1,000°C and a pressure of 50 to 500 kPa.

9. A system for producing hydrogen, the system comprising:
a first reactor configured to generate a first mixed gas by subjecting a feed gas containing C1 to C4 hydrocarbons to a dry reforming reaction in the presence of a catalyst;
a second reactor configured to convert carbon dioxide and carbon into a second mixed gas containing carbon monoxide through a reverse Boudouard reaction;
a gas mixing unit configured to prepare a third mixed gas by mixing the first mixed gas and the second mixed gas;
a syngas generation unit configured to convert the third mixed gas into syngas through a water-gas shift reaction;
a carbon dioxide separation unit configured to separate carbon dioxide from the syngas to obtain hydrogen; and
a carbon dioxide recirculation line configured to recirculate the carbon dioxide separated in the carbon dioxide separation unit to the second reactor.

10. The system of claim 9, wherein the first reactor is a first fluidized bed reactor, and the second reactor is a second fluidized bed reactor.

11. The system of claim 10, further comprising:
a cyclone connected between the first fluidized bed reactor and the gas mixing unit;
a catalyst supply line connecting the cyclone and the second fluidized bed reactor; and
a catalyst recirculation line connecting the second fluidized bed reactor and the first fluidized bed reactor,
wherein the cyclone is configured to separate the first mixed gas and the catalyst discharged from the first fluidized bed reactor, supply the first mixed gas to the gas mixing unit, and supply the catalyst to the second fluidized bed reactor.

12. The system of claim 9, further comprising a purification unit configured to purify the first mixed gas or the second mixed gas.

13. The system of claim 12, wherein the purification unit includes at least one selected from the group consisting of a scrubber and an adsorption column.
